Europäisches Patentamt

(19) European Patent Office

Office européen des brevets

(11) Publication number: **0 106 696**
**A2**

(12) **EUROPEAN PATENT APPLICATION**

(21) Application number: 83306307.6

(22) Date of filing: 18.10.83

(51) Int. Cl.³: **F 16 L 33/02**
**F 16 L 31/00**

(30) Priority: 20.10.82 US 435418

(43) Date of publication of application:
25.04.84 Bulletin 84/17

(84) Designated Contracting States:
AT BE CH DE FR GB IT LI LU NL SE

(71) Applicant: Wenk, Raymond C.
340 North Walkup
Crystal Lake Illinois 60014(US)

(72) Inventor: Wenk, Raymond C.
340 North Walkup
Crystal Lake Illinois 60014(US)

(74) Representative: Simpson, Ronald Duncan Innes et al,
A.A.Thornton & Co. Northumberland House 303-306
High Holborn
London WCIV 7LE(GB)

(54) Clamp for a convoluted hose.

(57) A clamp for a spirally convoluted hose takes the form of a one-piece, elongate flexible band having interlocking members (20, 22) at its opposite ends for locating in the valley. A bridge section (18) is positioned adjacent at least one of the members, which is offset to either side of the bridge section, so that the operator can visually check correct location of the bridge section on the ridge of the hose when securing the clamp.

FIG. 2

- 1 -

CLAMP FOR A CONVOLUTED HOSE

The present invention relates generally to clamps for securely fastening a relatively flexible spirally convoluted hose about a pipe, a nipple, a fitting, or the like.

Spirally ribbed hose, tubes or pipes (hereinafter referred to as hose) are used throughout industry. The hose is relatively flexible and made usually of polymeric material having a spiral reinforcing member, such as wire, defining a spiral ridge separating adjacent turns of a spiral valley. More recent convoluted hoses are integrally moulded with thickened ridges to provide the reinforcement, eliminating any wires. Various hose clamps or clips have been designed to hold such convoluted hose on to connecting pipes or fittings. A particular example of the use of such convoluted hose and clamps is in the automotive industry. Bellows-like hose pieces are used as air or liquid conduits as well as for covering various operative components such as drive shafts.

Various problems are encountered in securing convoluted hose as described above. Ordinary straight circular bands often prove inappropriate because of their inability to bridge the spiral convolutions of the hose. Many clamps are extremely difficult to manipulate and wrap about the hose convolutions. Some clamps employ bridge portions to span a hose convolution, but the bridge portion is located intermediate the ends of the clamp, hidden from visual observation, making it difficult to locate and position the clamp. Such an example is shown in U.S. Patent No. 4,129,926 which discloses a clamp in accordance with pre-characterizing clause of Claim 1.

The clamp disclosed in the said U.S. Patent has separate band portions joined by a separate bridge portion located intermediate the ends of the band on a side of the hose opposite the fastening ends of the clamp and thus hidden from view.

The present invention is characterized by the fact that the bridge portion is positioned closely adjacent at least one of the interlockable members.

With this arrangement, correct installation is facilitated by virtue of the fact that the operator can easily check visually that the bridge portion is located on the ridge as he secures the clamp by interengaging the interlockable members.

In a preferred embodiment of the invention, the bridge portion is of sufficient length to extend around the major part of one turn of the ridge, the said interlocking members being located at opposite ends of the bridge portion.

This arrangement is particularly advantageous in securing hoses in which the side walls of the valley are of thin material which are relatively easy to rupture, since the clamping pressure is essentially applied to the reinforced rib.

This is in contrast for example to the clamp shown in DT OS 2027584, in which the clamping is effected by wires located in the valleys. A further advantage of the clamps of the present invention is that the interlocking members are located in the valley so as to minimise their radial protuberance in the secured assembly.

This advantage is also achieved in accordance with another preferred embodiment in which the bridge section is of very limited extent, the remainder of the band being adapted to extend within the valley of the major part of one turn thereof.

Other prior art clamps are known from U.S. Patents Nos. 4,306,740 and 4,312,525. In these cases however, the clamps do not extend completely about the hose. Instead, clamp segments are fixed directly to the hose at one end thereof. Apart from the limitation that these clamps can only be used at the extreme end of a hose, they are not easily replaced when broken or damaged.

Some clamps in accordance with the invention will now be described in detail, by way of example, with reference to the accompanying drawings, in which:-

Figure 1 is a perspective view of a hose clamp in accordance with the present invention, positioned on the end of a section of convoluted hose;

Figure 2 is a perspective view similar to that of Figure 1, with the clamp positioned intermediate the ends of a section of convoluted hose;

Figure 3 is a view similar to that of Figure 2, illustrating an alternate form of hose clamp;

Figure 4 is a plan view of the hose clamp of Figures 1 and 2;

Figure 5 is a sectional view taken generally along line 5-5 of Figure 4, and

Figure 6 is a plan view of a hose clamp similar to that of Figure 4, but for a convoluted hose having a reverse spiral to that of Figures 1 and 2.

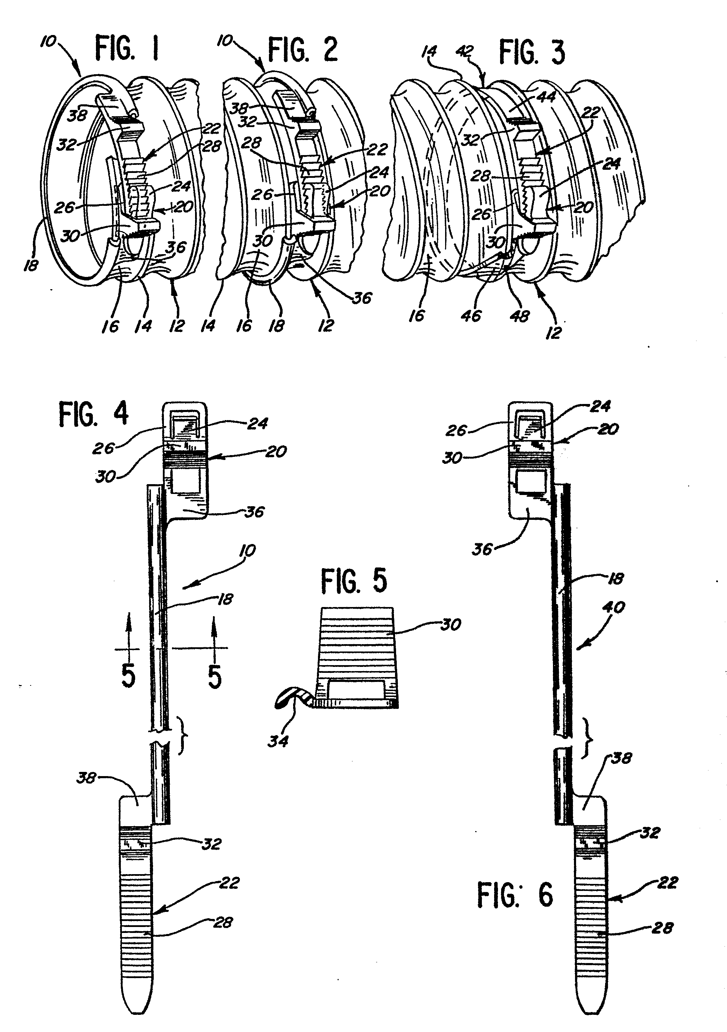

Referring to the drawings in greater detail, and first to Figures 1 and 4, a hose clamp, generally designated 10, is illustrated in clamping position on one end of a convoluted hose, generally designated 12 (Figure 1).

The convoluted hose 12 is of a known construction which has a spiral reinforcing member, such as wire, defining a spiral ridge 14 separating adjacent turns of a spiral valley 16. The "membrane" which forms the flexible hose and secures the spiral reinforcing wire often is of relatively thin polymeric material. The hose is designed for a wide range of applications. For instance, in the automotive industry such flexible convoluted hose pieces are used for air or liquid conduits as well as covers for operative components such as drive shafts. Consequently, ease of manipulation of the clamp and ready application and removal of the clamp to and from the hose are important.

Clamp 10 comprises a unitary structure having the general form of an elongate, flexible band, with a bridge portion 18 having a pair of opposed, interlockable members, generally designated 20 and 22, at the opposite ends of the band. The band and interlockable members are sized and adapted to extend in excess of $360^{\circ}$ about the circumference of hose 12.

Interlockable members 20, 22 are of the general type shown in my U.S. Patent No. 4,214,351. Briefly, interlockable member 20 includes a generally arcuate jaw defined by an outer cantilevered toothed arm 24 having a plurality of radially inwardly protruding teeth along the inside thereof. An inner arm 26 is spaced radially inwardly of the outer arm 24 defining a mouth therewith. Interlockable member 22 comprises a toothed tongue positionable within the mouth of interlockable member 20 between arms 24 and 26 thereof. The tongue has a plurality of radially outwardly protruding teeth 28 along the outside thereof oriented for interlocking engagement with the teeth of toothed arm 24 of interlockable member 20 for closing the clamp as shown in Figure 1.

In order to facilitate closing clamp 10, a radially outwardly extending serrated shoulder 30 is formed on interlockable member 20, and a similar radially outwardly extending serrated shoulder 32 is formed on interlockable member 22. In closing the clamp, the tongue formed by interlockable member 22 is forced inwardly toward interlockable member 20 until the teeth of the interlockable members are engaged. The clamp is securely tightened about hose 12 by continued pressure on the shoulders 30 and 32 of the interlockable members 20 and 22, respectively. The tongue can pass through interlockable member 20 to suit the circumference of hose 12.

An important feature of clamp 10 shown in Figures 1 and 4 is the provision of the bridge portion for readily positioning and maintaining the band on the spiral ridge 14 of convoluted hose 12 when the interlockable members are locked to close the clamp. More particularly, as best seen in Figure 5, the band bridge portion 18 is concave in cross-section on the inside thereof, as at 34, for embracing the spiral ridge of the hose. The concave configuration not only facilitates rapid wrapping of the clamp about the hose, but once positioned and tightened, the clamp cannot move axially of the hose, notwithstanding the fact that the clamp is positioned on and embraces the ridges of the hose. The bridge portion is of sufficient length to extend around the major part of one turn of the ridge.

Figure 2 illustrates clamp 10 in position intermediate the ends of a section of convoluted hose, as opposed to the position of the clamp on the extreme end of the hose as illustrated in Figure 1.

Another important feature of the clamp is the provision and location of integrally moulded sections 36 for interlockable member 20, and 38 for interlockable member 22, which extend laterally of the band to either side of the bridge section 18, as best seen in Figure 4. The sections 36, 38 therefore are positioned and dimensioned to span the valley and thus locate the interlockable members in the valley between the ridge to either side, while the clamping bridge portion 18 embraces and tightens on to the ridge of the convoluted hose.  It is important to note that the sections 36, 38 are located immediately adjacent the respective interlockable members 20, 22.  Thus, with the portion 18 being easily manipulatable for wrapping substantially entirely about the hose, the offset relationship of the interlockable members provides for easy alignment of the members when positioning the clamp about the hose.

Figure 6 shows a clamp, generally designated 40, similar to clamp 10 but designed for a convoluted hose having a reverse spiral to that. of hose 12 in Figures 1 and 2.  Like numerals have been applied to clamp 40 corresponding to like portions of clamp 10.  However, it can be seen that portions 36, 38 extend away from bridge portion 18 to opposite sides, compared to the clamp shown in Figure 4.

Figure 3 illustrates an alternative form of clamp, generally designated 42, which incorporates certain of the features of clamp 10.  More particularly, clamp 42, like clamp 10, is a one-piece structure integrally moulded of plastic material or the like.  The clamp includes interlockable members 20 and 22 at opposite ends thereof, similar to clamp 10.  However, clamp 42 has a generally flat band portion 44 which is designed for positioning within a valley of a convoluted hose which has a "membrane" sufficiently thick to accommodate the pressures exerted by the clamp.  In addition to being fabricated as a unitary plastic structure similar to clamp 10, clamp 42 has bridge means in the form of a single bridge portion 46 immediately adjacent interlockable member 20 for readily aligning the interlockable member with opposed interlockable member 22.  Thus, the bridge section is readily visible to an operator for ease of assembly of the clamp on to the hose. Bridge portion 46 has a small concave portion 48 for embracing a portion of the single ridge of the convoluted hose, as band 44 and interlockable members 20, 22 lie within adjacent valleys. Thus, the bridge portion is of very short extent, and the remainder of the band occupies the major part of one turn of the valley.

Thus, it can be seen that a new and improved unitary clamp has been provided for a convoluted hose. The clamp is formed as a unitary component, with no separate parts. Preferably, the clamp is fabricated of flexible plastic material, or the like, for accommodating various sizes and shapes of convoluted hose, such as round, elliptical or generally rectangular. The illustrated embodiments of the invention each have a portion of concave configuration on the inside thereof for embracing the spiral ridge of the convoluted hose. The bridge portions of the clamps are located immediately adjacent one or both of the interlockable members for ready alignment of the members in full visual observation of an operator. The design of the clamps also facilitates the moulding thereof so that the elongate portion of the band thereof is continuous and uninterrupted.

## CLAIMS:

1.     A clamp for a convoluted hose having a spiral valley, adjacent turns of which are separated by a spiral ridge, the clamp comprising an elongate flexible band having a pair of co-operating interlockable members at opposite ends thereof and a bridge portion intermediate its ends, the bridge portion being shaped to locate over the ridge, and the interlockable members being offset laterally to either side of the bridge portion, whereby the band can be wrapped around the hose with the bridge portion located on the ridge and the said members locating in the valley and interlockingly engaged therein, characterized in that the said bridge portion (18, 46) is positioned adjacent at least one of the said members (20, 22).

2.     A clamp according to claim 1, characterized in that the said bridge portion (18) is of sufficient length to extend around the major part of one turn of the ridge, the said interlocking members (20, 22) being located at opposite ends of the bridge portion.

3.     A clamp according to claim 1, characterised in that the bridge portion (46) is located adjacent one of the said interlocking members (20, 22) and the remainder of the band (44) is adapted to extend within the valley over the major part of one turn thereof.

4.     A clamp according to claim 1, characterized in that the said bridge portion (18, 46) has a concave inner cross-section (34, 48) for locating over the ridge.

5.     A clamp according to any preceding claim formed as a unitary component with no separate parts.

6.     A clamp according to claim 5, characterized in that the clamp is constituted by an integral moulding of plastics material or the like.

7.     A clamp according to any preceding claim, characterized in that one interlockable part (20) comprises a toothed jaw and the other interlockable part (22) comprises a toothed tongue for engagement in the said jaw.

FIG. 1

FIG. 2

FIG. 3

FIG. 4

FIG. 5

FIG. 6